# EUROPÄISCHE PATENTSCHRIFT

(11) **EP 3 117 046 B1**
(45) Veröffentlichungstag und Bekanntmachung des Hinweises auf die Patenterteilung: **04.03.2020**
(21) Anmeldenummer: 15703733.4
(22) Anmeldetag: 03.02.2015
(51) Int. Cl.: E03C 1/086

(54) **ZWISCHENHALTER**
INTERMEDIATE HOLDER
SUPPORT INTERMÉDIAIRE

(30) Priorität: 11.03.2014 DE 202014002258 U
(43) Veröffentlichungstag der Anmeldung: 18.01.2017
(73) Patentinhaber: Neoperl GmbH, 79379 Müllheim (DE)
(72) Erfinder: SCHÜRLE, Holger, 79379 Müllheim (DE); STEIN, Alexander, 79241 Ihringen (DE); MOCK, Elmar, 1922 Salvan VS (CH); MAST, Markus, 3005 Bern (CH); HIRNIAK, Andrew, 8001 Zürich (CH); BITMEAD, Naomi, 3047 Bremgarten b. Bern (CH)
(74) Vertreter: Börjes-Pestalozza, Henrich
(86) Internationale Anmeldenummer: PCT/EP2015/000203
(87) Internationale Veröffentlichungsnummer: WO 2015/135615

(56) Entgegenhaltungen:
- DE-A1- 3 344 614
- DE-A1-102006 057 206
- DE-U1-202007 007 667
- US-A- 5 367 548
- US-A1- 2005 040 650
- US-B1- 6 682 355

## Beschreibung

Die Erfindung betrifft einen Zwischenhalter, der zumindest ein Haltemittel und wenigstens ein Befestigungsmittel aufweist, wobei der Zwischenhalter aus einem Materialstreifen hergestellt ist und seine Halte- und Befestigungsmittel als Umformfahnen des Materialstreifens ausgebildet sind, die an ihrem einen Fahnenende über einen Biegebereich mit dem Materialstreifen verbunden sind und die mit ihrem gegenüberliegenden freien anderen Fahnenende über den Umfang des Materialstreifens vorstehen. Ferner betrifft die Erfindung die Verwendung eines solchen Zwischenhalters.

Aus der US 5 367 548 A ist eine wiederverwendbare Verriegelungsanordnung vorbekannt, die in einem Kernreaktor zwischen einem Führungsrohr und dem oberen Endstück eines Brennelementes vorgesehen ist. Solche Führungsrohre haben eine relativ geringe Wandstärke und benötigen daher eine Hülse am oberen Ende, um die notwendige Abstützung für Befestigungspunkte und Schulterstops zu gewährleisten. Um alle losen Befestigungsteile am Reaktorstandort zu eliminieren, die bei Verlust während der Montage und Demontage nur schwer aus dem unter Wasser stehenden Reaktorbereich hervorgeholt werden könnten, ist an der oberen Endhülse der Führungsrohranordnung eine als Zwischenhalter der eingangs erwähnten Art ausgebildete Haltehülse vorgesehen. In Figur 4 der US 5 367 548 A ist ein Ausführungsbeispiel einer solchen Haltehülse gezeigt, die an der oberen Endhülse unter Verwendung von nach innen weisenden Laschen befestigt ist. Dabei weist die vorbekannte Haltehülse eine Vielzahl solcher, nach innen weisender Laschen auf, die in eine Nut am Umfang des oberen Endes des Brennelementes eingreifen.

Aus der US 2005/040650 A1 ist eine Rohrverbindung mit einem Knickring vorbekannt, der in einen Rohrkörper eingebettet ist.

Dieser Knickring hat eine polygonale Form mit acht Stirnflächen. An den Stirnflächen stehen elastische Haltelaschen nach außen vor. Um das den Knickring in sich aufnehmende Rohr durch eine Steck-/Drehverbindung mit einem benachbarten Rohr verbinden zu können, ist ein zapfenförmiger Rohrverbinder vorgesehen, der in die stirnseitigen Rohröffnungen der benachbarten Rohrabschnitte eingreift. Dieser Rohrverbinder trägt an seinem Zapfenumfang Nuten, in welche die Haltelaschen durch eine Relativverdrehung des den Knickring aufnehmenden Rohres gegenüber dem Rohrverbinder einrasten. Durch eine gegenläufige Drehbewegung des den Knickring aufweisenden Rohres lässt sich die mit Hilfe des zapfenförmigen Rohrverbinders hergestellte Rohrverbindung auch wieder lösen.

Aus der US 6 682 355 B1 ist ein elektrisches Anschlussstück vorbekannt, mit dem ein gepanzertes Elektrokabel, das an dem Kabelumfang seiner Panzerung voneinander beabstandete und ringförmig umlaufende Haltenuten aufweist, an einer Schalttafel eingerastet werden kann. Das vorbekannte Anschlussstück umfasst ein hohles rohrförmiges und elektrisch leitendes Gehäuse, das an seinem vorderen Gehäuseende eine Befestigungsanordnung aufweist, die ein Einschnappen in der plattenförmigen Schalttafel ermöglicht. Innerhalb des hinteren Gehäuseendes ist ein zylindrisch geformter Schaltring gefestigt, der eine Vielzahl von Befestigungslaschen umfasst, die in Längsrichtung ausgerichtet und nach innen umgebogen sind, um einen im Vergleich zum Außendurchmesser des armierten Kabels kleineren Durchmesser zu definieren. Die freien Laschenenden der nach innen vorstehenden Befestigungslaschen sind in Längsrichtung innerhalb des Spaltringes versetzt, so dass jede Befestigungslasche in eine der umlaufenden Nuten am Außenumfang des gepanzerten Elektrokabels eingreift. Der enge Eingriff der Befestigungslaschen in die am Kabelumfang vorgesehenen Nuten soll für einen guten Oberflächenkontakt zwischen den Befestigungslaschen und dem armierten Elektrokabel sorgen.

Es ist bereits bekannt, dass durch die Verwendung eines Zwischenhalters zum Einsetzen eines Strahlreglers oder dergleichen sanitäre Funktionseinheiten in sanitäre Auslaufarmaturen auf die Verwendung eines Mundstücks verzichtet werden kann. Es ist weiterhin bekannt, dass durch die Verwendung eines Zwischenhalters zum Einsetzen sanitärer Funktionseinheiten in sanitäre Auslaufarmaturen die Fixierung der sanitären Funktionseinheiten in solchen Sanitärarmaturen ermöglicht wird, die nicht in zeit- und kostenintensiven Arbeitsschritten bearbeitet werden müssen, wie etwa dem Einfräsen eines geeigneten Gewindes am Wasserauslauf.

Aus der EP 1 554 438 B1 ist bereits ein hülsenförmiger Zwischenschalter vorbekannt, mit dem eine als Einsetzpatrone ausgestaltete sanitäre Funktionseinheit in einer sanitären Auslaufarmatur lösbar befestigt werden kann. Der Zwischenhalter weist die Eigenschaft auf, dass die als Einsetzpatrone ausgestaltete sanitäre Funktionseinheit gegenüber dem Zwischenhalter und der Zwischenhalter gegenüber der inneren Umfangswandung der Auslaufarmatur umlaufend abgedichtet ist. Somit werden zwei Ringdichtungen benötigt, womit der Nachteil einhergeht, dass unter Umständen Leckagen zwischen Zwischenhalter und Auslaufarmatur beziehungsweise zwischen Zwischenhalter und Einsetzpatrone auftreten können. Die Verwendung von zwei Ringdichtungen bedeutet zudem einen höheren Kostenaufwand.

Ein hülsenförmiger Zwischenhalter ist auch in der DE 10 2006 057 206 B4 offenbart. Eine sanitäre Funktionseinheit, die hier als Strahlregler ausgebildet ist, wird gemeinsam mit einer Hülse in den Wasserauslauf einer sanitären Auslaufarmatur eingesteckt. Der hülsenförmige Zwischenhalter weist Widerhaken auf, die mittels axialer Relativverschiebung der Funktionseinheit gegenüber dem Zwischenhalter radial in die Innenwandung des Wasserauslaufs eingreifen und auf diese Weise eine Befestigung des Zwischenhalters im Wasserauslauf der sanitären Auslaufarmatur gewährleisten. Der vorbekannte Zwischenhalter weist jedoch ebenfalls den bereits erwähnten Nachteil auf, dass zwei Ringdichtungen benötigt werden, um die Ringzonen zwischen dem Zwischenhalter und der Auslaufarmatur einerseits und zwischen dem Zwischenhalter und der Funktionseinheit andererseits abzudichten. Zur Anbringung der Ringdichtung, die die Ringzone zwischen dem hülsenförmigen Zwischenhalter und dem Wasserauslauf abzudichten hat, ist zudem eine entsprechende Nut am Zwischenhalter notwendig, um die Anordnung der Ringdichtung am Außenumfang des Zwischenhalters zu gewährleisten. Dies stellt den weiteren Nachteil einer entsprechenden Bearbeitung des Zwischenhalters mit entsprechendem Kosten- und Zeitaufwand dar.

In der DE 33 44 614 A1 ist ein Adapter zum Verbinden einer Wasserauslaufarmatur mit kreisförmigem Anschlussquerschnitt an einen Wasserauslauf mit ungenormtem, beispielsweise mit ovalem Anschlussquerschnitt offenbart. Der Adapter weist dabei eine äußere Klemmhülse auf, die eine innere Konushülse umschließt, wobei die Klemmhülse und die Konushülse mit aneinander anliegenden, im Winkel zur Mittelachse stehenden Gleitflächen versehen sind.

In der DE 20 2007 007 667 U1 ist eine sanitäre Auslaufarmatur mit einem Wasserauslauf sowie mit einem dem Wasserauslauf zugeordneten Strahlregler offenbart, welcher ein Strahlreglergehäuse mit darin befindlichen Einbauteilen aufweist.

Es besteht daher die Aufgabe, einen Zwischenhalter der eingangs erwähnten Art zu schaffen, der die funktionssichere Befestigung eines Strahlreglers oder eines anderen sanitären Einsetzteiles im Wasserauslauf einer sanitären Auslaufarmatur erlaubt und dessen Herstellung gleichzeitig mit einem reduzierten Aufwand möglich ist.

Die erfindungsgemäße Lösung dieser Aufgabe besteht bei dem Zwischenhalter der eingangs erwähnten Art darin, dass das zumindest eine Haltemittel zur Befestigung des Zwischenhalters in einem Wasserauslauf einer sanitären Auslaufarmatur bestimmt und das wenigstens eine Befestigungsmittel zum lösbaren Befestigen einer sanitären Funktionseinheit vorgesehen ist, dass das über den Innenumfang des Materialstreifens vorstehende Fahnenende der wenigstens einen als Befestigungsmittel bestimmten Umformfahne als Gewindegang-Abschnitt eines Innengewindes ausgebildet ist, und dass das Innengewinde für ein Außengewinde am Außenumfang der sanitären Funktionseinheit bestimmt ist.

Der erfindungsgemäße Zwischenhalter weist zumindest ein Haltemittel auf, das zum Befestigen des Zwischenhalters in einem Wasserauslauf einer sanitären Auslaufarmatur dient. Der Zwischenhalter hat des Weiteren wenigstens ein Befestigungsmittel, das zum lösbaren Befestigen einer in den Zwischenhalter eingeführten oder eingesetzten sanitären Funktionseinheit dient. Die sanitäre Funktionseinheit kann beispielsweise ein Filtersieb, ein Durchflussmengenregler oder Durchflussbegrenzer, ein Strahlregler oder die beispielsweise als Einsetzpatrone oder Einsetzeinheit ausgestaltete Kombination von zumindest zwei der vorgenannten Bestandteile sein.

Der erfindungsgemäße Zwischenhalter ist aus einem Materialstreifen hergestellt, der eine offene oder geschlossene Ringform hat. In diesem Materialstreifen sind die Halte- und Befestigungsmittel als Umformfahnen des Materialstreifens ausgebildet. Die als Halte- oder als Befestigungsmittel dienenden Umformfahnen sind an ihrem einen Fahnenende über einen Biegebereich mit dem Materialstreifen verbunden, während sie mit ihrem gegenüberliegenden freien anderen Fahnenende über den Umfang des Materialstreifens vorstehen. Ein solcher, aus einem Materialstreifen hergestellter Zwischenhalter lässt sich mit geringem Aufwand herstellen und erlaubt eine einfache und rasche Befestigung einer sanitären Funktionseinheit im Wasserauslauf einer sanitären Auslaufarmatur.

Um einen festen und dauerhaften Halt der sanitären Funktionseinheit im ringförmigen Zwischenhalter zu begünstigen, und um die sanitäre Funktionseinheit bei Bedarf aus dem Zwischenhalter lösen und beispielsweise auswechseln oder zu Reinigungszwecken entnehmen zu können, ist erfindungsgemäß vorgesehen, dass das über den Innenumfang des Materialstreifens vorstehende Fahnenende der wenigstens einen, als Befestigungsmittel bestimmten Umformfahne als Gewindegang-Abschnitt eines Innengewindes ausgebildet ist. Dieses Innengewinde ist für ein Außengewinde am Außenumfang der sanitären Funktionseinheit bestimmt.

Dabei wird die einfache und kostengünstige Herstellung des erfindungsgemäßen Zwischenhalters noch begünstigt, wenn der zur Herstellung des erfindungsgemäßen Zwischenhalters verwendete Materialstreifen als Blechring ausgebildet ist. Ein solcher ringförmiger Blechstreifen lässt sich nicht nur durch einfache Stanz- und Umformvorgänge herstellen -, vielmehr können in diesem Blechstreifen die Halte- und Befestigungsmittel durch eben solche Stanz- und Umformvorgänge eingearbeitet werden. Nach Durchführung dieser Stanz- und Umformvorgänge weist der als Blechring ausgebildete Zwischenhalter eine ausreichende Härte und Formstabilität auf, um sich einerseits sicher im Wasserauslauf verankern zu lassen und um andererseits die sanitäre Funktionseinheit fest und dauerhaft in sich aufzunehmen.

Dabei ist es besonders vorteilhaft, wenn das durch zumindest ein Befestigungsmittel und vorzugsweise durch mehrere Befestigungsmittel gebildete Innengewinde als zweigängiges Gewinde ausgebildet ist, das ein vollständiges Einschrauben der sanitären Funktionseinheit allein durch eine 360°-Drehung erlaubt.

Um in den Wasserauslauf der sanitären Auslaufarmatur kein Innengewinde einarbeiten zu müssen, sondern statt dessen darin den zur Befestigung der sanitären Funktionseinheit bestimmten Zwischenhalter auf einfache Weise einbringen zu können, ist es vorteilhaft, wenn das über den Außenumfang des Materialstreifens vorstehende Fahnenende der zumindest einen, als Haltemittel bestimmten Umformfahne als Befestigungskralle ausgebildet ist.

Dabei sieht eine bevorzugte Ausführungsform gemäß der Erfindung vor, dass die zumindest eine, als Befestigungskralle ausgestaltete Umformfahne zur reibschlüssigen Befestigung innenumfangsseitig an einem Wasserauslauf einer sanitären Auslaufarmatur vorgesehen ist. Ein solcher Zwischenhalter, der außenumfangsseitig eine über den Zwischenhalter-Außenumfang vorstehende Befestigungskralle hat, kann auf einfache Weise in den Wasserauslauf eingedrückt, eingeschlagen oder dergleichen eingesetzt werden und ersetzt darin anschließend jegliches Innengewinde, das andernfalls zur Befestigung der sanitären Funktionseinheit erforderlich wäre.

Der erfindungsgemäße Zwischenhalter kann einen kreisrunden Ringquerschnitt aufweisen. Die Herstellung des erfindungsgemäßen Zwischenhalters kann jedoch noch zusätzlich erleichtert werden, wenn der Materialstreifen über eine Mehrzahl von plattenförmigen Materialstreifen-Segmenten gebildet ist, von denen benachbarte Materialstreifen-Segmente über eine etwa achsparallel zur Zwischenhalter-Längsachse orientierte Materialstreifen-Biegezone miteinander verbunden sind.

Der erfindungsgemäße Zwischenhalter kann eine gerundete Geometrie aufweisen. Bevorzugt wird jedoch eine Ausführungsform, bei welcher der Zwischenschalter eine vieleckige Form hat. Eine besonders vorteilhafte Ausführungsform gemäß der Erfindung sieht vor, dass die Materialstreifen-Segmente in ihrer Lage zueinander einem runden Zwischenhalter-Querschnitt angenähert sind. Der Zwischenhalter kann dazu aus einem Materialstreifen mit beispielsweise zwölf Materialstreifen-Segmenten gebildet sein, welche Materialstreifen-Segmente zu einem runden Zwischenhalter-Querschnitt geformt sind.

Die zur Befestigung des Zwischenhalters im Wasserauslauf einer sanitären Auslaufarmatur erforderlichen Haltemittel können über den gesamten: Außenumfang des Zwischenhalters verteilt sein.

Möglich ist auch, die Haltemittel am Außenumfang des Zwischenhalters in den Positionen vorzusehen, an denen innenumfangsseitig die als Gewindeabschnitte ausgebildeten Befestigungsmittel zur Befestigung der sanitären Funktionseinheit vorgesehen sind. Möglich ist auch, dass die innenumfangsseitig angeordneten Befestigungsmittel für die sanitäre Funktionseinheit versetzt zu den außenumfangsseitigen Haltemitteln angeordnet sind. Es sind auch Kombinationen versetzter und gleicher Anordnung der Befestigungsmittel und der Haltemittel an der Innenseite und der Außenseite des Zwischenhalters möglich.

Eine bevorzugte Ausführungsform gemäß der Erfindung sieht vor, dass von den Materialstreifen-Segmenten wenigstens ein Materialstreifen-Segment mindestens ein Befestigungsmittel und zumindest ein Materialstreifen-Segment wenigstens ein Haltemittel trägt.

Bevorzugt wird jedoch eine Ausführungsform, bei der von benachbarten Materialstreifen-Segmenten jeweils das eine Materialstreifen-Segment wenigstens ein Befestigungsmittel und das andere Materialstreifen-Segment zumindest ein Haltemittel trägt.

Eine vorteilhafte Weiterbildung gemäß der Erfindung besteht darin, dass mindestens ein Materialstreifen-Segment eine aus einer Mehrzahl von Befestigungsmitteln oder von Haltemitteln und vorzugsweise aus zwei oder drei Befestigungsmitteln oder Haltemitteln gebildete Gruppe, von Umformfahnen trägt.

Dabei wird ein fester Halt begünstigt und auch die einfache Herstellbarkeit des erfindungsgemäßen Zwischenhalters noch erleichtert, wenn die eine Gruppe bildenden Umformfahnen zumindest eines Materialstreifen-Segments auf einer achsparallel zur Zwischenhalter-Längsachse orientierten Linie angeordnet sind.

Um ein Lösen des Zwischenhalters im Wasserauslauf der sanitären Auslaufarmatur während des Eindrehens der Funktionseinheit in den Zwischenhalter zu verhindern, ist es vorteilhaft, wenn der an dem dem Biegebereich abgewandten Fahnenende angeordnete freie Stirnrand zumindest einer als Haltemittel bestimmten Umformfahne in Eindrehrichtung des Innengewindes und vorzugsweise quer dazu angeordnet ist. Eine besonders einfache Herstellung des erfindungsgemäßen Zwischenschalters wird ermöglicht, wenn die Umformfahnen als Stanzzungen ausgebildet und vorzugsweise durch dreiseitige Stanzungen im Materialstreifen hergestellt sind.

Ein bevorzugtes Anwendungsbeispiel gemäß der Erfindung sieht vor, dass die sanitäre Einsetzeinheit als Strahlregler ausgebildet ist oder einen Strahlregler aufweist.

Eine bevorzugte Verwendung des oben beschriebenen erfindungsgemäßen Zwischenhalters in Verbindung mit einer sanitären Funktionseinheit, zwischen der und dem Innenumfang des Wasserauslaufs der sanitären Auslaufarmatur ein Dichtring vorgesehen ist, sieht vor, dass der abströmseitige Stirnrand des Zwischenhalters in Durchströmrichtung vor dem Dichtring angeordnet ist. Bei dieser bevorzugten Ausführungsform verhindert der Dichtring wirkungsvoll solche, auch das Auslaufstrahlbild einer sanitären Funktionseinheit beeinträchtigenden Leckageströme, die in der Ringzone zwischen dem Zwischenhalter und dem Innenumfang der Auslaufarmatur oder in der Ringzone zwischen dem Zwischenhalter und dem Außenumfang der sanitären Funktionseinheit vorbeifließen könnten.

Weiterbildungen gemäß der Erfindung ergeben sich aus den Ansprüchen in Verbindung mit den Figuren sowie der Beschreibung. Nachstehend wird die Erfindung anhand eines bevorzugten Ausführungsbeispieles noch näher beschrieben.

Es zeigt:
- Figur 1: eine sanitären Auslaufarmatur mit einer sanitären Funktionseinheit, die über einen ringförmigen Zwischenhalter im Wasserauslauf der sanitären Auslaufarmatur zu befestigen ist, wobei die Auslaufarmatur, der Zwischenhalter, die sanitäre Funktionseinheit und ein zur Abdichtung bestimmter Dichtring in einer auseinandergezogenen Einzelteildarstellung gezeigt sind,
- Figur 2: den Zwischenhalter aus Figur 1 in einer von der Zuströmseite aus gezeigten Perspektivdarstellung,
- Figur 3: den Zwischenhalter aus Figur 1 und 2 in einer Seitenansicht,
- Figur 4: den Zwischenhalter aus Figur 1 bis 3 in einer von der Abströmseite aus gezeigten Perspektivdarstellung,
- Figur 5: den Zwischenhalter aus Figur 1 bis 4 in einer Draufsicht auf den zuströmseitigen Stirnrand,
- Figur 6: den Zwischenhalter aus Figur 1 bis 5 in einer gegenüber Figur 3 gedrehten Seitenansicht,
- Figur 7: den Zwischenhalter aus Figur 1 bis 6 in einer Draufsicht auf den abströmseitigen Stirnrand,
- Figuren 8 bis 11: die einzelnen Montageschritte, die zur Befestigung einer sanitären Funktionseinheit im Wasserauslauf einer sanitären Auslaufarmatur mit Hilfe des Zwischenhalters gemäß den Figuren 1 bis 7 erforderlich sind,

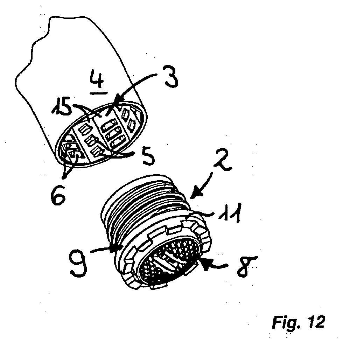

- Figur 12: den im Wasserauslauf verankerten Zwischenhalter vor dem Einschrauben oder Einsetzen der sanitären Funktionseinheit,

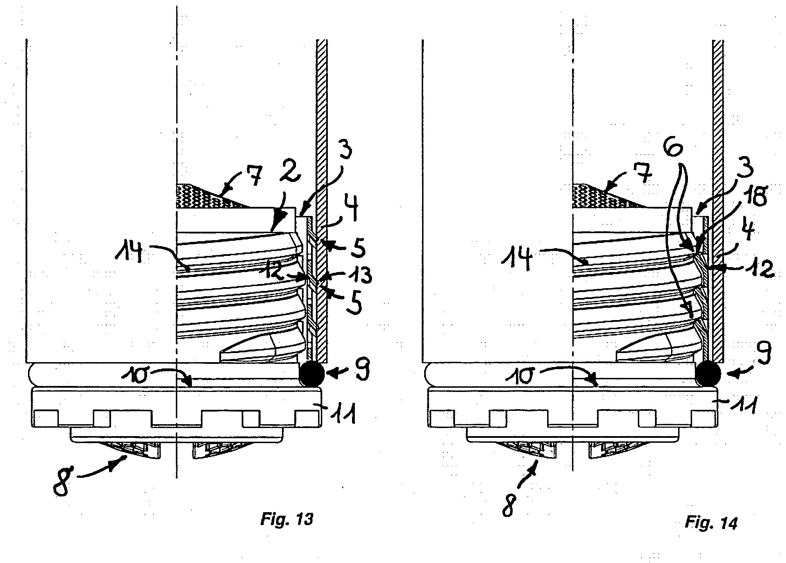

- Figur 13: die in einem Teil-Längsschnitt gezeigte Auslaufarmatur in Figur 1 im Bereich ihres Wasserauslaufs, wobei im Wasserauslauf die sanitären Funktionseinheit mit Hilfe des Zwischenhalters gemäß den Figuren 1 bis 12 verankert ist, und
- Figur 14: den die Funktionseinheit in sich tragenden Wasserauslauf in einem gegenüber Figur 13 gedrehten Teil-Längsschnitt.

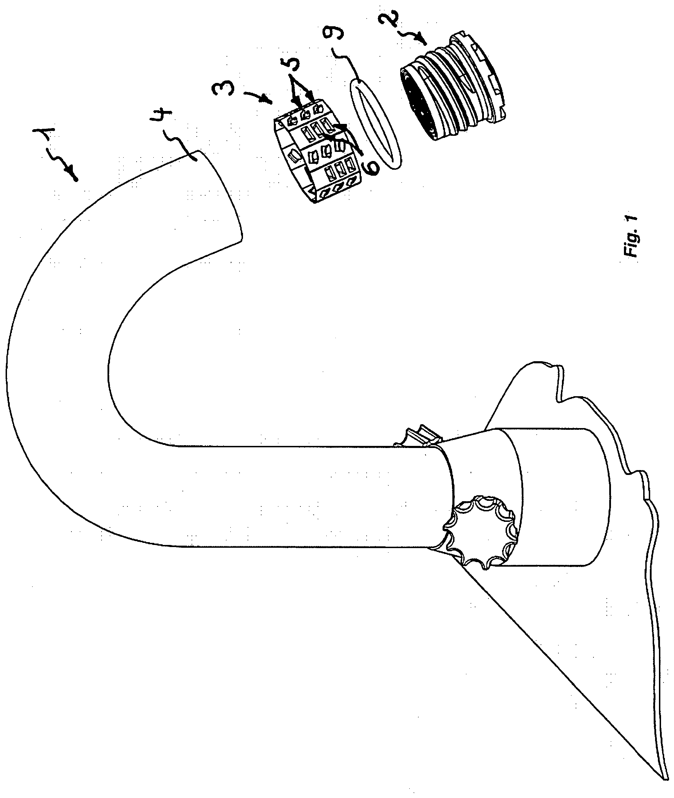

In Figur 1 ist eine sanitäre Auslaufarmatur 1 mit einer sanitären Funktionseinheit 2 dargestellt, die über einen ringförmigen Zwischenhalter 3 in dem Wasserauslauf 4 der sanitären Auslaufarmatur 1 zu befestigen ist. Der Zwischenhalter 3 weist an seinem Außenumfang zumindest ein Haltemittel 5 auf, das zum Befestigen des Zwischenhalters 3 in dem Wasserauslauf 4 der sanitären Auslaufarmatur 1 dient. Der Zwischenhalter 3 hat des Weiteren an seinem Innenumfang wenigstens ein Befestigungsmittel 6, das zum lösbaren Befestigen einer in den Zwischenhalter 3 eingeführten oder eingesetzten sanitären Funktionseinheit 2 dient. Die sanitäre Funktionseinheit 2 kann beispielsweise ein Filtersieb 7, ein Durchflussmengenregler oder Durchflussbegrenzer, ein Strahlregler 8 oder die beispielsweise als Einsetzpatrone oder Einsetzeinheit ausgestaltete Kombination von zumindest zwei der vorgenannten Bestandteile sein. Zwischen der sanitären Funktionseinheit 2 und dem Innenumfang des Wasserauslaufs 4 der sanitären Auslaufarmatur 1 ist vorzugsweise nur ein einziger Dichtring 9 vorgesehen, wobei der abströmseitige Stirnrand des Zwischenhalters 3 in Durchströmrichtung vor dem Dichtring 9 angeordnet ist. Um den Dichtring 9 an einem über den Zwischenhalter 3 vorstehenden Teilbereich der Funktionseinheit 2 platzieren zu können, kann am Außenumfang der Funktionseinheit 2 eine Ringnut vorgesehen sein. Bei: dem hier dargestellten Ausführungsbeispiel ist der Dichtring 9 zwischen dem Zwischenhalter 3 und einem Ringabsatz 10 platziert, der durch einen am abströmseitigen Stirnrand der Funktionseinheit 2 außenumfangsseitig vorstehenden Ringflansch 11 gebildet ist. Der Dichtring 9 verhindert wirkungsvoll solche, auch das Auslaufstrahlbild der Funktionseinheit 2 beeinträchtigenden Leckageströme, die in der Ringzone zwischen dem Zwischenhalter 3 und dem Innenumfang der Auslaufarmatur 1 oder in der Ringzone zwischen dem Zwischenhalter 3 und dem Außenumfang der sanitären Funktionseinheit 2 vorbeifließen könnten.

Der Zwischenhalter 3 ist aus einem Materialstreifen hergestellt. In diesem Materialstreifen sind die Halte- und Befestigungsmittel 5, 6 als Umformfahnen des Materialstreifens ausgebildet. Die als Halte- oder Befestigungsmittel 5, 6 dienenden Umformfahnen sind an ihrem einen Fahnenende über einen Biegebereich 12 mit dem Materialstreifen verbunden, während sie mit ihrem gegenüberliegenden freien anderen Fahnenende 13, 18 über den Umfang des Materialstreifens vorstehen. Ein solcher, aus einem Materialstreifen hergestellter Zwischenhalter 3 lässt sich mit geringem Aufwand herstellen und erlaubt eine einfache und rasche Befestigung der Funktionseinheit 2 im Wasserauslauf 4 der sanitären Auslaufarmatur 1.

Um den Zwischenhalter 3 möglichst einfach und kostengünstig herstellen zu können, ist dieser Zwischenhalter hier als Blechring ausgebildet. Ein solcher ringförmiger Blechstreifen lässt sich nicht nur durch einfache Stanz- und Umformvorgänge herstellen, vielmehr können in diesen Blechstreifen die Halte- und Befestigungsmittel 5, 6 durch eben solche Stanz- und Umformvorgänge eingearbeitet werden. Nach Durchführung dieser Stanz- und Umformvorgänge weist der als Blechring ausgebildete Zwischenhalter 3 eine ausreichende Härte und Formstabilität auf, um sich einerseits sicher im Wasserauslauf 4 der sanitären Auslaufarmatur 1 verankern zu lassen und um andererseits die sanitäre Funktionseinheit 2 fest und dauerhaft in sich aufzunehmen.

Um den festen und dauerhaften Halt der sanitären Funktionseinheit 2 im ringförmigen Zwischenhalter 3 zu begünstigen und um die sanitäre Funktionseinheit 2 bei Bedarf aus dem Zwischenhalter 3 wieder lösen und beispielsweise auswechseln oder zu Reinigungszwecken entnehmen zu können, ist das über den Innenumfang des Materialstreifens vorstehende Fahnenende 18 der wenigstens einen, als Befestigungsmittel 6 bestimmten Umformfahne als Gewindegang-Abschnitt eines Innengewindes ausgebildet. Dabei ist das Innengewinde für ein Außengewinde 14 am Außenumfang der sanitären Funktionseinheit 2 bestimmt.

Um den Zwischenhalter 3 auf einfache Weise im Wasserauslauf 4 der sanitären Auslaufarmatur 1 verankern zu können, ist das über den Außenumfang des Materialstreifens vorstehende Fahnenende 13 der zumindest einen, als Haltemittel 5 bestimmten Umformfahne als Befestigungskralle ausgestaltet. Um ein unbeabsichtigtes Lösen des Zwischenhalters 3 im Wasserauslauf 4 beim Eindrehen der Funktionseinheit 2 in die Befestigungsmittel 6 des Zwischenhalters 3 zu vermeiden, ist die zumindest eine, als Befestigungskralle ausgestaltete Umformfahne 5 zur reibschlüssigen Befestigung innenumfangsseitig am Wasserauslauf 4 der sanitären Auslaufarmatur 1 vorgesehen. Das freie Fahnenende 13 der als Befestigungskralle dienenden Umformfahne 5 ist quer zur Eindrehrichtung des am Innenumfang des Zwischenhalters 3 vorgesehenen Innengewindes orientiert und weist mit seinem freien Rand in Eindrehrichtung.

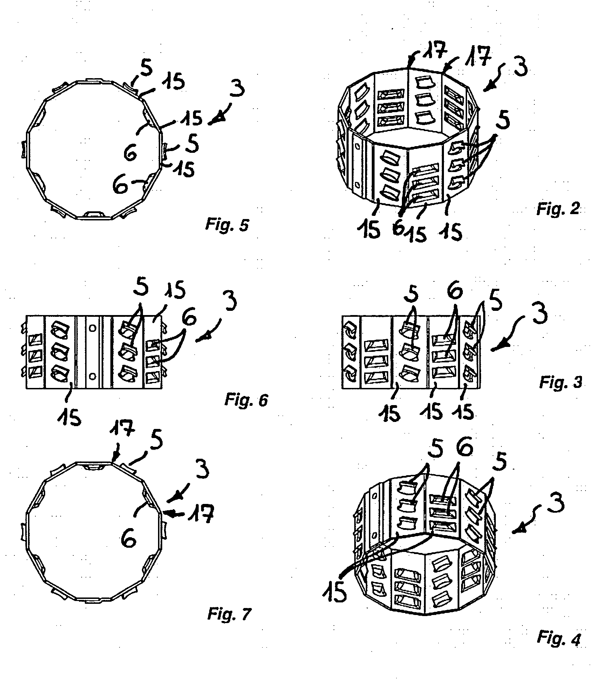

Der Zwischenhalter 3 kann aus Kunststoff hergestellt sein. Bevorzugt wird jedoch eine Ausführungsform, bei welcher der Zwischenhalter 3 aus einem metallischen Werkstoff, insbesondere aus einem korrosionsbeständigen metallischen Werkstoff, hergestellt ist. Der Zwischenhalter 3 ist hier aus einer Mehrzahl von plattenförmigen Materialstreifen-Segmenten 15 gebildet, von denen benachbarte Materialstreifen-Segmente 15 über eine etwa achsparallel zur Zwischenhalter-Längsachse orientierte Materialstreifen-Biegezone 17 miteinander verbunden sind. Diese Materialstreifen-Segmente 15 sind in ihrer Lage zueinander einem runden Zwischenhalter-Querschnitt angenähert. Von den benachbarten Materialstreifen-Segmenten 15 trägt jeweils das eine Materialstreifen-Segment 15 wenigstens ein Befestigungsmittel 6 und das andere Materialstreifen-Segment 15 zumindest ein Haltemittel 5. In den Figuren 2 bis 7 ist erkennbar, dass mindestens ein Materialstreifen-Segment 15 eine aus einer Mehrzahl von Befestigungsmitteln 6 oder von Haltemitteln 5 und vorzugsweise aus zwei oder drei Befestigungsmitteln 6 oder Haltemitteln 5 gebildete Gruppe von Umformfahnen trägt. Dabei sind die eine Gruppe bildenden Umformfahnen zumindest eines Materialstreifen-Segments 15 auf eine achsparallel zur Zwischenhalter-Längsachse orientierten Line angeordnet.

Die Umformfahnen des hier dargestellten Zwischenhalters 3 sind als Stanzzungen ausgebildet und durch dreiseitige Stanzungen in dem den Zwischenhalter 3 bildenden Blechstreifen hergestellt.

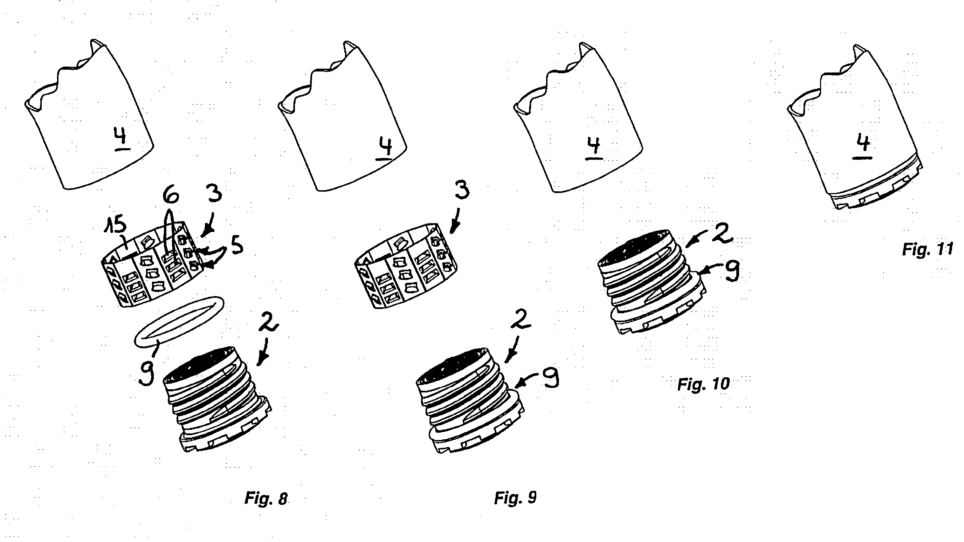

In den Figuren 8 bis 11 sind die einzelnen Schritte gezeigt, die zur Befestigung einer sanitären Funktionseinheit 2 im Wasserauslauf 4 einer sanitären Auslaufarmatur 1 erforderlich sind. Dazu wird zunächst der Zwischenhalter 3 durch Eindrehen der sanitären Funktionseinheit 2 in den Zwischenhalter 3 mit diesem verbunden. Zur Gewährleistung der Dichtung zwischen der Innenwandung am Wasserauslauf 4 der sanitären Auslaufarmatur 1 und der sanitären Funktionseinheit 2 wird zuvor der Dichtring 9, der vorzugsweise aus elastischem Material hergestellt ist, auf die sanitäre Funktionseinheit 2 aufgeschoben. Die aus der Funktionseinheit 2, dem Dichtring 9 sowie dem Zwischenhalter 3 gebildete Zusammenstellung kann auf einfache Weise vorgefertigt werden und braucht anschließend zur bestimmungsgemäßen Verwendung lediglich in dem Wasserauslauf 4 der sanitären Auslaufarmatur 1 eingesetzt werden. Weitere, hier nicht dargestellte Ausführungsbeispiele sehen vor, dass die Funktionseinheit 2 mittels einer Klemm-, Rast- oder Steckverbindung öder dergleichen mit dem Zwischenhalter 3 verbunden wird. Um die Funktionseinheit 2 im Zwischenhalter 3 zu befestigen, sehen weitere, hier nicht gezeigte Ausführungsbeispiele vor, dass die Funktionseinheit mittels Klemm-, Rast- oder Steckverbindungen im Zwischenhalter 3 gehalten ist.

### Bezugszeichenliste

- 1: sanitäre Auslaufarmatur
- 2: Funktionseinheit
- 3: Zwischenhalter
- 4: Wasserauslauf
- 5: Haltemittel
- 6: Befestigungsmittel
- 7: Filtersieb
- 8: Strahlregler
- 9: Dichtring
- 10: Ringabsatz
- 11: Ringflansch
- 12: Biegebereich
- 13: (nach außen vorstehendes) Fahnenende
- 14: Außengewinde
- 15: Materialstreifen-Segment
- 17: Materialstreifen-Biegezone
- 18: (nach innen vorstehendes) Fahnenende

## Patentansprüche

1. Zwischenhalter (3), der zumindest ein Haltemittel (5) und wenigstens ein Befestigungsmittel (6) aufweist, wobei der Zwischenhalter (3) aus einem Materialstreifen hergestellt ist und seine Halte- und Befestigungsmittel (5, 6) als Umformfahnen des Materialstreifens ausgebildet sind, die an ihrem einen Fahnenende über einen Biegebereich mit dem Materialstreifen verbunden sind und die mit ihrem gegenüberliegenden freien anderen Fahnenende über den Umfang des Materialstreifens vorstehen, **dadurch gekennzeichnet, dass** das zumindest eine Haltemittel (5) zur Befestigung des Zwischenhalters (3) in einem Wasserauslauf (4) einer sanitären Auslaufarmatur (1) bestimmt und das wenigstens eine Befestigungsmittel (6) zum lösbaren Befestigen einer sanitären Funktionseinheit (2) vorgesehen ist, dass das über den Innenumfang des Materialstreifens vorstehende Fahnenende der wenigstens einen, als Befestigungsmittel (6) bestimmten Umformfahne als Gewindegang-Abschnitt eines Innengewindes ausgebildet ist, und dass das Innengewinde für ein Außengewinde (14) am Außenumfang der sanitären Funktionseinheit (2) bestimmt ist.

2. Zwischenhalter nach Anspruch 1, **dadurch gekennzeichnet, dass** das über den Materialstreifen-Außenumfang vorstehende Fahnenende der zumindest einen, als Haltemittel (5) bestimmten Umformfahne als Befestigungskralle ausgestaltet ist.

3. Zwischenhalter nach Anspruch 2, **dadurch gekennzeichnet, dass** die zumindest eine, als Befestigungskralle ausgestaltete Umformfahne zur reibschlüssigen Befestigung innenumfangsseitig an einem Wasserauslauf (4) einer sanitären Auslaufarmatur (1) vorgesehen ist.

4. Zwischenhalter nach einem der Ansprüche 1 bis 3, **dadurch gekennzeichnet, dass** der Zwischenhalter (3) von einer Mehrzahl von plattenförmigen Materialstreifen-Segmenten (15) gebildet ist, von denen benachbarte Materialstreifen-Segmente (15) über eine etwa achsparallel zur Zwischenhalter-Längsachse orientierte Materialstreifen-Biegezone (17) miteinander verbunden sind.

5. Zwischenhalter nach Anspruch 4, **dadurch gekennzeichnet, dass** die Materialstreifen-Segmente (15) in ihrer Lage zueinander einem runden Zwischenhalter-Querschnitt angenähert sind.

6. Zwischenhalter nach Anspruch 4 oder 5, **dadurch gekennzeichnet, dass** von den Materialstreifen-Segmenten (15) wenigstens ein Materialstreifen-Segment (15) mindestens ein Befestigungsmittel (6) und zumindest ein Material-Streifensegment (15) wenigstens ein Haltemittel (5) trägt.

7. Zwischenhalter nach einem der Ansprüche 4 bis 6, **dadurch gekennzeichnet, dass** von benachbarten Materialstreifen-Segmenten (15) jeweils das eine Materialstreifen-Segment (15) wenigstens ein Befestigungsmittel (6) und das andere Materialstreifen-Segment (15) zumindest ein Haltemittel (5) trägt.

8. Zwischenhalter nach einem der Ansprüche 1 bis 7, **dadurch gekennzeichnet, dass** mindestens ein Materialstreifen-Segment (15) eine aus einer Mehrzahl von Befestigungsmitteln (6) oder von Haltemitteln (5) und vorzugsweise aus zwei oder drei Befestigungsmitteln oder Haltemitteln gebildete Gruppe von Umformfahnen trägt.

9. Zwischenhalter nach Anspruch 8, **dadurch gekennzeichnet, dass** die eine Gruppe bildenden Umformfahnen zumindest eines Materialstreifen-Segments (15) auf einer achsparallel zur Zwischenhalter-Längsachse orientierten Linie angeordnet sind.

10. Zwischenhalter nach einem der Ansprüche 1 bis 9, **dadurch gekennzeichnet, dass** der an dem dem Biegebereich abgewandten Fahnenende (13) angeordnete freie Stirnrand zumindest einer als Haltemittel (5) bestimmten Umformfahne in Eindrehrichtung des Innengewindes und vorzugsweise quer dazu angeordnet ist.

11. Zwischenhalter nach einem der Ansprüche 1 bis 10, **dadurch gekennzeichnet, dass** die Umformfahnen als Stanzzungen ausgebildet und vorzugsweise durch dreiseitige Stanzungen im Materialstreifen hergestellt sind.

12. Zwischenhalter nach einem der Ansprüche 1 bis 11, **dadurch gekennzeichnet, dass** die sanitären Funktionseinheit (2) als Strahlregler ausgebildet ist oder einen Strahlregler aufweist.

13. Zwischenhalter nach einem der Ansprüche 1 bis 12, **dadurch gekennzeichnet, dass** der Zwischenhalter (3) ringförmig ausgestaltet ist.

14. Zwischenhalter nach einem der Ansprüche 1 bis 13, **dadurch gekennzeichnet, dass** das zumindest eine Haltemittel (5) am Außenumfang des Zwischenhalters (3) vorgesehen ist.

15. Zwischenhalter nach einem der Ansprüche 1 bis 14, **dadurch gekennzeichnet, dass** das wenigstens eine Befestigungsmittel (6) am Innenumfang des Zwischenhalters (3) vorgesehen ist.

16. Verwendung eines Zwischenhalters nach einem der Ansprüche 1 bis 15 in Verbindung mit einer sanitären Funktionseinheit (2), zwischen der (2) und dem Innenumfang des Wasserauslaufs (4) der sanitären Auslaufarmatur (1) ein Dichtring (9) vorgesehen ist, wobei der abströmseitige Stirnrand des Zwischenhalters (3) in Durchströmrichtung vor dem Dichtring (9) angeordnet ist.

## Claims

1. Intermediate holder (3) which has at least one holding means (5) and at least one fastening means (6), wherein the intermediate holder (3) is manufactured from one material strip and the holding means and fastening means (5, 6) of said intermediate holder (3) are configured as formed lugs of the material strip that at the one lug end of said lugs by way of a bent region are connected to the material strip and that by way of the opposite other free lug end of said lugs protrude beyond the circumference of the material strip, **characterized in that** the at least one holding means (5) is specified for fastening the intermediate holder (3) in a water outlet (4) of a sanitary outlet fitting (1) and the at least one fastening means (6) is provided for releasably fastening a sanitary functional unit (2), **in that** that lug end of the at least one formed lug that is specified as a fastening means (6) that protrudes beyond the internal circumference of the material strip is configured as a portion of a turn of an internal thread, and **in that** the internal thread is specified for an external thread (14) on the external circumference of the sanitary functional unit (2).

2. Intermediate holder according to Claim 1, **characterized in that** that lug end of the at least one formed lug that is specified as a holding means (5) that protrudes beyond the material-strip external circumference is designed as a fastening claw.

3. Intermediate holder according to Claim 2, **characterized in that** the at least one formed lug which is designed as a fastening claw is provided for friction-locking fastening on the side of the internal circumference on a water outlet (4) of a sanitary outlet fitting (1).

4. Intermediate holder according to one of Claims 1 to 3, **characterized in that** the intermediate holder (3) is formed by a plurality of plate-shaped material-strip segments (15) of which mutually adjacent material-strip segments (15) are connected by way of a material-strip bending zone (17) which is oriented so as to be approximately axially parallel with the intermediate-holder longitudinal axis.

5. Intermediate holder according to Claim 4, **characterized in that** the material-strip segments (15) in the mutual position thereof approximate a round intermediate-holder cross section.

6. Intermediate holder according to Claim 4 or 5, **characterized in that** of the material-strip segments (15) at least one material-strip segment (15) supports at least one fastening means (6), and at least one material-strip segment (15) supports at least one holding means (5).

7. Intermediate holder according to one of Claims 4 to 6, **characterized in that** of mutually adjacent material-strip segments (15) in each case the one material-strip segment (15) supports at least one fastening means (6), and the other material-strip segment (15) supports at least one holding means (5) .

8. Intermediate holder according to one of Claims 1 to 7, **characterized in that** at least one material-strip segment (15) supports a group of formed lugs which is formed from a plurality of fastening means (6) or of holding means (5), preferably from two or three fastening means or holding means.

9. Intermediate holder according to Claim 8, **characterized in that** the formed lugs of at least one material-strip segment (15) that form a group are disposed on a line which is axially parallel with the intermediate-holder longitudinal axis.

10. Intermediate holder according to one of Claims 1 to 9, **characterized in that** the free end periphery of at least one formed lug which is specified as a holding means (5) that is disposed on that lug end (13) that faces away from the bent region is disposed in the screwing-in direction of the internal thread and preferably transversely thereto.

11. Intermediate holder according to one of Claims 1 to 10, **characterized in that** the formed lugs are configured as punched features and are preferably manufactured by trilateral punched features in the material strip.

12. Intermediate holder according to one of Claims 1 to 11, **characterized in that** the sanitary functional unit (2) is configured as a jet regulator or has a jet regulator.

13. Intermediate holder according to one of Claims 1 to 12, **characterized in that** the intermediate holder (3) is configured so as to be annular.

14. Intermediate holder according to one of Claims 1 to 13, **characterized in that** the at least one holding means (5) is provided on the external circumference of the intermediate holder (3).

15. Intermediate holder according to one of Claims 1 to 14, **characterized in that** the at least one fastening means (6) is provided on the internal circumference of the intermediate holder (3).

16. Use of an intermediate holder according to one of Claims 1 to 15 in combination with a sanitary functional unit (2), between which (2) and the internal circumference of the water outlet (4) of the sanitary outlet fitting (1) an annular seal (9) is provided, wherein the outflow-side end periphery of the intermediate holder (3) in the flow direction is disposed ahead of the annular seal (9).

## Revendications

1. Support intermédiaire (3), qui présente au moins un moyen de retenue (5) et au moins un moyen de fixation (6), dans lequel le support intermédiaire (3) est fabriqué à partir d'une bande de matière et ses moyens de retenue et de fixation (5, 6) sont réalisés sous forme de pattes déformées de la bande de matière, qui sont reliées à leur première extrémité de patte par une zone pliée à la bande de matière et qui sont saillantes par leur autre extrémité de patte libre opposée au-dessus de la périphérie de la bande de matière, **caractérisé en ce que** ledit au moins un moyen de retenue (5) est destiné à la fixation du support intermédiaire (3) dans une sortie d'eau (4) d'une robinetterie sanitaire (1) et ledit au moins un moyen de fixation (6) est prévu pour la fixation amovible d'une unité fonctionnelle sanitaire (2), **en ce que** l'extrémité de patte saillante au-dessus de la périphérie intérieure de la bande de matière de ladite au moins une patte déformée, déterminée comme moyen de fixation (6), est réalisée sous la forme d'une partie de filet d'un filet intérieur, et **en ce que** le filet intérieur est destiné à un filet extérieur (14) à la périphérie extérieure de l'unité fonctionnelle sanitaire (2).

2. Support intermédiaire selon la revendication 1, **caractérisé en ce que** l'extrémité de patte saillante au-dessus de la périphérie extérieure de la bande de matière de ladite au moins une patte déformée déterminée comme moyen de retenue (5) est réalisée sous la forme d'une griffe de fixation.

3. Support intermédiaire selon la revendication 2, **caractérisé en ce que** ladite au moins une patte déformée réalisée sous la forme d'une griffe de fixation est prévue pour la fixation par friction sur le côté de la périphérie intérieure à une sortie d'eau (4) d'une robinetterie sanitaire (1).

4. Support intermédiaire selon l'une quelconque des revendications 1 à 3, **caractérisé en ce que** le support intermédiaire (3) est formé par une multiplicité de segments de bande de matière en forme de plaques (15), dont des segments de bande de matière voisins (15) sont reliés l'un à l'autre par une zone pliée de bande de matière (17) d'axe orienté environ parallèlement à l'axe longitudinal du support intermédiaire.

5. Support intermédiaire selon la revendication 4, **caractérisé en ce que** les segments de bande de matière (15) s'approchent par leur position l'un par rapport à l'autre d'une section transversale ronde du support intermédiaire.

6. Support intermédiaire selon une revendication 4 ou 5, **caractérisé en ce que**, parmi les segments de bande de matière (15), au moins un segment de bande de matière (15) porte au moins un moyen de fixation (6) et au moins un segment de bande de matière (15) porte au moins un moyen de retenue (5).

7. Support intermédiaire selon l'une quelconque des revendications 4 à 6, **caractérisé en ce que**, parmi des segments de bande de matière voisins (15), chaque fois le premier segment de bande de matière (15) porte au moins un moyen de fixation (6) et l'autre segment de bande de matière (15) porte au moins un moyen de retenue (5).

8. Support intermédiaire selon l'une quelconque des revendications 1 à 7, **caractérisé en ce qu'**au moins un segment de bande de matière (15) porte un groupe de pattes déformées formé d'une multiplicité de moyens de fixation (6) ou de moyens de retenue (5) et de préférence de deux ou trois moyens de fixation ou moyens de retenue.

9. Support intermédiaire selon la revendication 8, **caractérisé en ce que** les pattes déformées formant un groupe d'au moins un segment de bande de matière (15) sont disposées sur une ligne d'axe orienté parallèlement à l'axe longitudinal du support intermédiaire.

10. Support intermédiaire selon l'une quelconque des revendications 1 à 9, **caractérisé en ce que** le bord frontal libre disposé sur l'extrémité de patte (13) éloignée de la zone pliée d'au moins une patte déformée déterminée comme moyen de retenue (5) est disposé dans le sens de vissage du filet intérieur et de préférence transversalement à celui-ci.

11. Support intermédiaire selon l'une quelconque des revendications 1 à 10, **caractérisé en ce que** les pattes déformées sont formées par des parties estampées et sont fabriquées de préférence par des estampages triangulaires dans la bande de matière.

12. Support intermédiaire selon l'une quelconque des revendications 1 à 11, **caractérisé en ce que** l'unité fonctionnelle sanitaire (2) est formée par un régulateur de jet ou présente un régulateur de jet.

13. Support intermédiaire selon l'une quelconque des revendications 1 à 12, **caractérisé en ce que** le support intermédiaire (3) est de forme annulaire.

14. Support intermédiaire selon l'une quelconque des revendications 1 à 13, **caractérisé en ce que** ledit au moins un moyen de retenue (5) est prévu à la périphérie extérieure du support intermédiaire (3).

15. Support intermédiaire selon l'une quelconque des revendications 1 à 14, **caractérisé en ce que** ledit au moins un moyen de fixation (6) est prévu à la périphérie intérieure du support intermédiaire (3).

16. Utilisation d'un support intermédiaire selon l'une quelconque des revendications 1 à 15 en relation avec une unité fonctionnelle sanitaire (2), entre laquelle (2) et la périphérie intérieure de la sortie d'eau (4) de la robinetterie sanitaire (1) il est prévu un anneau d'étanchéité (9), dans laquelle le bord frontal aval du support intermédiaire (3) est disposé avant l'anneau d'étanchéité (9) dans le sens de l'écoulement.
